(19) Europäisches Patentamt
European Patent Office
Office européen des brevets

(11) **EP 3 292 301 B1**

(12) **EUROPÄISCHE PATENTSCHRIFT**

(45) Veröffentlichungstag und Bekanntmachung des Hinweises auf die Patenterteilung:
**16.03.2022 Patentblatt 2022/11**

(21) Anmeldenummer: **16720067.4**

(22) Anmeldetag: **20.04.2016**

(51) Internationale Patentklassifikation (IPC):
**F03D 7/02** (2006.01)

(52) Gemeinsame Patentklassifikation (CPC):
**F03D 7/0272; F03D 7/0276;** F05B 2220/706;
F05B 2270/101; F05B 2270/1012; F05B 2270/1033;
F05B 2270/327; F05B 2270/335; Y02E 10/72;
Y02E 70/30

(86) Internationale Anmeldenummer:
**PCT/EP2016/058752**

(87) Internationale Veröffentlichungsnummer:
**WO 2016/177578 (10.11.2016 Gazette 2016/45)**

(54) **VERFAHREN ZUM BETREIBEN EINER WINDENERGIEANLAGE**

METHOD FOR OPERATING A WIND TURBINE

PROCÉDÉ POUR FAIRE FONCTIONNER UNE ÉOLIENNE

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **07.05.2015 DE 102015208554**

(43) Veröffentlichungstag der Anmeldung:
**14.03.2018 Patentblatt 2018/11**

(73) Patentinhaber: **Wobben Properties GmbH**
**26607 Aurich (DE)**

(72) Erfinder:
• **ENGELKEN, Sönke**
**28215 Bremen (DE)**
• **MIHOV, Nikolay**
**1612 Sofia (BG)**
• **MENDONCA, Angelo**
**26382 Wilhelmshaven (DE)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
EP-A1- 2 775 139          AU-A1- 2014 200 885
DE-A1-102010 014 165     US-A- 5 155 375

**Beschreibung**

Die vorliegende Erfindung betrifft ein Verfahren zum Betreiben einer Windenergieanlage. Außerdem betrifft die vorliegende Erfindung eine Windenergieanlage.

Windenergieanlagen und Verfahren zum Betreiben solcher sind bekannt. Windenergieanlagen speisen elektrische Leistung in ein elektrisches Versorgungsnetz ein und werden zunehmend auch dazu verwendet, das elektrische Versorgungsnetz gegebenenfalls elektrotechnisch zu stützen.

Eine Möglichkeit einer solchen Stützung sieht so aus, dass nach einem Frequenzeinbruch die Windenergieanlage kurzzeitig eine höhere Leistung in das elektrische Versorgungsnetz, das vereinfachend auch einfach als Netz bezeichnet werden kann, einspeist, die höher ist als die Windenergieanlage aufgrund der vorherrschenden Windbedingungen in dem Moment erzeugen kann. Hierfür wird nämlich zusätzlich zu der Leistung, die aus dem Wind erzeugt wird, elektrische Leistung aus der kinetischen Energie des Rotors verwendet. Das beinhaltet insbesondere den aerodynamischen Rotor der Windenergieanlage als auch einen damit gekoppelten elektromagnetischen Rotor bzw. Läufer des Generators. Das gilt besonders für getriebelose Windenergieanlagen, bei denen der Läufer des Generators mit dem aerodynamischen Rotor unmittelbar gekoppelt ist und der Läufer auch ein signifikantes Trägheitsmoment aufweist. In all diesen drehenden Teilen zusammen steckt diese kinetische Energie des Rotors.

Jedenfalls führt diese Einspeisung kinetischer Energie dazu, dass sich die Geschwindigkeit des Rotors verringert. Nachdem diese Stützungsmaßnahme vorüber ist oder beendet sein darf, sollte die Windenergieanlage in ihren normalen Betriebszustand zurückkehren. Vereinfacht ausgedrückt bedeutet das für die Annahme konstanter Windgeschwindigkeit über den betrachteten Zeitraum, dass sich die Drehzahl wieder erhöhen muss und dafür die elektrische Leistung des Generators für einen gewissen Zeitraum notwendigerweise unter der durch den aerodynamischen Rotor erzeugten Antriebsleistung liegen muss, und somit erst langsam wieder erhöht werden kann.

Eine solche Drehzahlerhöhung, also Zurückführung der Anlage in den normalen Betriebszustand kann aber Probleme aufweisen. Zunächst besteht auch immer die Gefahr, dass sich die Windenergieanlage in diesen zwangsläufig eingetretenen Betriebszustand der geringen Drehzahl auch in einem aerodynamisch weniger effektiven Betriebszustand befindet. Entsprechend sorgfältig muss die Anlage hier betrieben werden, was auch für das Zurückführen in den normalen Betriebszustand gilt. Darüber hinaus hat die Reduzierung der elektrischen Leistung zum Zwecke der Wiederbeschleunigung unter Umständen auch negative Auswirkungen auf das Netz, das nach der vorherigen Störung noch auf eine möglichst konstante und hohe Leistungseinspeisung durch die Windenergieanlage angewiesen ist.

Das Deutsche Patent- und Markenamt hat in der Prioritätsanmeldung zu vorliegender Anmeldung folgenden Stand der Technik recherchiert: DE 10 2009 014 012 A1, DE 11 2005 000 681 T5 und WO 2011/124696 A2. Zudem hat die Internationale Recherchebehörde die Dokumente EP 2 775 139 A1 und US 5 155 375 02 A recherchiert.

Der vorliegenden Erfindung liegt somit die Aufgabe zugrunde, wenigstens eines der oben genannten Probleme zu adressieren und eine Lösung vorzuschlagen. Insbesondere soll ein vorteilhafter Weg aufgezeigt werden, eine Windenergieanlage nach einer solchen Drehzahlreduzierung, bedingt durch Netzstützung durch Einspeisung erhöhter Leistung, möglichst günstig in den normalen Betriebszustand zurückzubringen. Zumindest soll eine zu bisher bekannten Lösungen alternative Lösung vorgeschlagen werden.

Erfindungsgemäß wird ein Verfahren nach Anspruch 1 vorgeschlagen. Dieser Anspruch betrifft somit ein Verfahren zum Betreiben einer einen Generator aufweisenden Windenergieanlage, die üblicherweise auch als WEA abgekürzt wird. Grundsätzlich wird mit diesem Verfahren elektrische Leistung in ein elektrisches Versorgungsnetz eingespeist. Es wird nun die Situation berücksichtigt, dass nach einem ersten Betriebszustand mit einer ersten Leistungsabgabe und einer ersten Drehzahl in einen zweiten Betriebszustand mit einer zweiten Leistungsabgabe und einer zweiten Drehzahl gewechselt werden soll. Das Verfahren betrifft dabei besonders die Situation, dass der erste Betriebszustand ein Betriebszustand erhöhter Leistungsabgabe ist und von diesem in einen normalen Betriebszustand zurückgesteuert werden soll. Der normale Betriebszustand bildet dabei den zweiten Betriebszustand. Dabei ist dieser Betriebszustand erhöhter Leistungsabgabe einer, bei der die Windenergieanlage kurzzeitig mehr Leistung abgegeben hat, als sie aufgrund der vorherrschenden Windbedingungen erzeugen konnte. Die Windenergieanlage hat also zusätzlich zu der aus dem Wind erzeugten Leistung noch gespeicherte Leistung ergänzend abgegeben. Diese wurde aus der kinetischen Energie der Drehung des Rotors der Windenergieanlage und des Läufers des Generators entnommen, so dass die Drehzahl nun geringer geworden ist.

Aus diesem Betriebszustand erhöhter Leistungsabgabe, der dann nämlich beendet ist oder beendet wird, soll in den normalen Betriebszustand zurückgekehrt werden. Unter diesem normalen Betriebszustand ist derjenige zu verstehen, in dem so viel Leistung in das elektrische Netz eingespeist wird, wie die Windenergieanlage aufgrund der vorherrschenden Windbedingungen aus dem Wind erzeugen kann. Das betrifft dabei grundsätzlich hinsichtlich der Einspeisung in das elektrische Versorgungsnetz die Leistung bzw. Leistungsmenge, die die Windenergieanlage dem Wind entnehmen konnte, abzüglich davon anderweitig benutzter Leistung. Diese anderweitig benutzte Leistung betrifft bei der Verwendung einer fremderregten Synchronmaschine besonders auch das Bereitstellen des entsprechenden Erregerstroms. Es kommen aber auch andere oder weitere Leistungsabgänge in Betracht.

Jedenfalls soll die Windenergieanlage von diesem Betriebszustand erhöhter Leistungsabgabe und damit reduzierter Drehzahl in diesen normalen Betriebszustand mit dem Wind angepassten Leistungsabgabe und auch einer daran angepassten Drehzahl zurückgesteuert werden. Dabei fällt die Leistung nach oder am Ende dieses Betriebszustandes erhöhter Leistung regelmäßig auch stark ab.

Hierzu wird vorgeschlagen, zunächst eine zum Einspeisen verfügbare aerodynamische Leistung zu bestimmen. Diese verfügbare aerodynamische Leistung ist somit eine, die zunächst von der aus dem Wind entnehmbaren aerodynamischen Leistung ausgeht, die aber um Leistung reduziert ist, die noch vor der Einspeisung anderweitig benötigt wird. Dies wird vereinfachend nachfolgend als verfügbare Leistung bezeichnet. Aus dieser verfügbaren Leistung, also der als verfügbare Leistung bestimmten Leistung, wird dann eine Solldrehzahl bestimmt. Es wird also nicht einfach die letzte Drehzahl vor dieser Stützungsmaßnahme verwendet, also die Drehzahl die vorlag, kurz bevor die Windenergieanlage eine erhöhte Leistung eingespeist hat, sondern sie wird abhängig dieser verfügbaren Leistung bestimmt.

Ist nun diese Solldrehzahl bestimmt, wird davon abhängig eine an dem Generator einzustellende Sollleistung vorgegeben. Die Anlage kann dann ausgehend von dieser Sollleistung die Anlage steuern. Diese Sollleistung, die hierbei regelmäßig nachgeführt werden kann, gibt also das Regelungsziel vor, das letztlich zu diesem normalen Betriebszustand hinführt.

Es kann nun also unter Berücksichtigung der tatsächlichen Situation vor Ort das Zurücksteuern in den normalen Betriebszustand durchgeführt werden. Hierbei ist auch zu beachten, dass die verfügbare aerodynamische Leistung in dem jeweiligen Moment nicht ausschließlich von den vorherrschenden Windbedingungen abhängt, sondern auch von der vorliegenden Drehzahl der Windenergieanlage, was erfindungsgemäß erkannt und berücksichtigt wurde. Besonders kann es sein, dass durch die reduzierte Drehzahl eine geringere Schnelllaufzahl vorliegt, die wiederum nicht optimal ist und damit nicht so viel Leistung aus dem Wind entnommen werden kann, wie das in dem Moment bei optimaler Schnelllaufzahl der Fall wäre. Auch dies wird durch das vorgeschlagene Verfahren berücksichtigt.

Es kommt aber besonders auch das Steuern, besonders Zurücksteuern, aus einem ersten Betriebszustand in den zweiten Betriebszustand in Betracht, bei dem der erste aus anderen Gründen nicht die optimale Leistungsabgabe oder die optimale Drehzahl aufweist. Es kann dabei auch der zweite Betriebszustand eine höhere Drehzahl als der erste aufweisen. Es wird dann von einer höheren Drehzahl zu einer niedrigeren gesteuert.

Die erste und zweite Drehzahl und die erste und zweite Leistungsabgabe sind grundsätzlich unterschiedlich, es kann aber der Fall auftreten, dass die erste und zweite Leistungsabgabe gleich sind.

Gemäß einer Ausführungsform wird vorgeschlagen, dass die verfügbare Leistung aus einer Drehzahl des Generators und der in einen elektrischen Zwischenspeicher, insbesondere einen Gleichspannungszwischenkreis, eingespeisten Leistung ermittelt wird. Hierdurch wird es möglich, bei der verfügbaren Leistung auch die Drehzahl des Generators zu berücksichtigen und Informationen aus diesem Zwischenspeicher zu verwenden.

Vorzugsweise wird eine Windenergieanlage mit einem sogenannten Vollumrichterkonzept zugrunde gelegt. Hier wird sämtliche durch den Generator erzeugte Leistung gleichgerichtet und in den Gleichspannungszwischenkreis gegeben, der somit den elektrischen Zwischenspeicher bildet. Aus diesem Gleichspannungszwischenkreis erfolgt dann mittels eines Wechselrichters das Einspeisen in das elektrische Versorgungsnetz. Insoweit kann die in den Gleichspannungszwischenkreis, oder anderen Zwischenspeicher, eingespeiste Leistung Informationen über die verfügbare Leistung geben. Dabei wurde hier erkannt, dass durch die gemeinsame Berücksichtigung der Drehzahl des Generators und dieser Leistung in dem Zwischenspeicher eine Information über die verfügbare aerodynamische Leistung abgeleitet werden kann.

Gemäß einer Ausführungsform wird vorgeschlagen, dass die verfügbare Leistung durch einen Zustandsbeobachter ermittelt wird. hierdurch kann durch ein in dem Beobachter zugrunde gelegtes System bzw. Teilsystem auch eine nicht unmittelbar messbare Größe erfasst werden. Es kann auch eine schlecht messbare Größe, deren Messung beispielsweise ungenau oder verrauscht ist, durch den Beobachter besser erfasst werden.

Vorzugsweise weist der Zustandsbeobachter die Drehzahl des Generators und das mechanische Drehmoment des Generators als zu beobachtende Zustandsgrößen auf. Die Drehzahl des Generators kann üblicherweise messtechnisch erfasst werden und liegt häufig auch als Messgröße vor. Durch ihre Berücksichtigung als Zustandsgröße in dem Zustandsbeobachter ist es aber möglich, die Messqualität zu verbessern. Insbesondere kann hierbei die Messqualität hinsichtlich Genauigkeit und Dynamik an die Bedürfnisse zur vorgesehenen Erfassung der verfügbaren Leistung angepasst werden. Dies ist besonders auch durch die Parametrierung des Beobachters, insbesondere durch den Parameter $k_\omega$ möglich, was unten auch noch erläutert wird.

Das Berücksichtigen des mechanischen Drehmomentes des Generators als Zustandsgröße in dem Zustandsbeobachter hat besonders den Vorteil, dass diese Größe nicht bzw. nicht ohne weiteres messtechnisch erfassbar ist und zugleich gut geeignet ist, die verfügbare Leistung zu ermitteln. Durch einen solchen Zustandsbeobachter liegen somit die Drehzahl des Generators und das mechanische Drehmoment des Generators als für die weitere Ermittlung unmittelbar verwendbare Größen vor. Der Zustandsbeobachter kann diese Größen in jedem Abtastschritt und damit auch in einer online-Implementierung ermitteln und zur Verfügung stellen.

Vorzugsweise ist der Zustandsbeobachter durch die folgende Struktur definiert, die hier wie folgt als Systembeschreibung in Matrixdarstellung angegeben ist:

$$\begin{bmatrix} \dot{\hat{\boldsymbol{\omega}}} \\ \dot{\hat{\boldsymbol{T}}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in der

- J das gemeinsame Trägheitsmoment des Rotors und Generators bezeichnet,

- $\omega$ die Drehzahl des Generators ist,

- $k_\omega$ und $k_\tau$ Parameter zur Beeinflussung der Dynamik des Beobachters sind,

- $T_{el}$ als elektrisches Drehmoment bezeichnet wird und sich als Quotient eingespeister Leistung $P_{DC}$ in einen bzw. dem elektrischen Zwischenspeicher und der Drehzahl $\omega$ berechnet und

- $T_{mech}$, das mechanische Drehmoment des Rotors und Generators bezeichnet, wobei

die beobachteten Größen mit einem $\hat{}$-Zeichen gekennzeichnet sind und die zu ermittelnde verfügbare Leistung als Produkt aus beobachteter Drehzahl $\hat{\omega}$ und beobachtetem mechanischen Drehmoment $\hat{T}_{mech}$ berechnet wird.

J bezeichnet somit das gemeinsame Trägheitsmoment des Rotors und Generators, was insoweit eine getriebelose Windenergieanlage impliziert, bei der der aerodynamische Rotor unmittelbar mit dem Läufer des Generators mechanisch gekoppelt ist. Letztlich beinhaltet dieses Trägheitsmoment natürlich alles, was hier mit dem Rotor und Läufer des Generators fest gekoppelt ist und sich zusammen dreht. Allerdings dürften ohnehin sämtliche solcher Elemente, wie beispielsweise auch die Rotornabe, Teil des Rotors sein. Grundsätzlich könnte aber im Falle einer getriebebehafteten Windenergieanlage der Teil des Trägheitsmomentes des Generators über ein entsprechendes Übersetzungsverhältnis in dieses gesamte Trägheitsmoment hinein gerechnet werden.

Die Drehzahl $\omega$ des Generators ist bei diesem getriebelosen Konzept entsprechend gleichzeitig die Drehzahl des damit fest verbundenen Rotors. Die Parameter $k_\omega$ und $k_\tau$ sind Parameter zur Beeinflussung der Dynamik des Beobachters und ihre Wirkung ergibt sich auch aus dem Verständnis der angegebenen Formel. Besonders beeinflusst der Parameter $k_\omega$ ein Nachführen der beobachteten Drehzahl $\hat{\omega}$ in Abhängigkeit der Differenz zwischen dem beobachteten $\hat{\omega}$ und dem gemessenen $\omega$. Dieselbe Differenz wird über den Parameter $k_\tau$ für das Nachführen des mechanischen Drehmomentes $\hat{T}_{mech}$ beeinflusst.

Mit diesem Zustandsbeobachter sind somit auch durch eine vergleichsweise einfache Struktur diese beiden Zustände, nämlich die Drehzahl $\omega$ und das mechanische Drehmoment $\hat{T}_{mech}$ ermittelbar.

Das elektrische Drehmoment $T_{el}$ wird hier als Quotient aus in den Zwischenspeicher eingespeister elektrischer Leistung und der Drehzahl $\omega$ berechnet. Es gilt also die Gleichung:

$$T_{el} = \frac{P_{DC}}{\omega}$$

Die Drehzahl $\omega$ ist messbar, es kann hier aber auch die beobachtete Drehzahl $\hat{\omega}$ des Zustandsbeobachters verwendet werden. Die in den Zwischenspeicher, insbesondere den Gleichspannungszwischenkreis eingespeiste Leistung $P_{DC}$ kann erfasst bzw. gemessen werden und ist in dem Vollumrichter bzw. der zugehörigen oder enthaltenen Steuerung regelmäßig bekannt und liegt dort als Größe vor.

Die zu ermittelnde verfügbare Leistung kann nun einfach als Produkt aus dieser beobachteten Drehzahl $\hat{\omega}$ und dem beobachteten mechanischen Drehmoment $\hat{T}_{mech}$ berechnet werden. Dies stellt die zum Einspeisen verfügbare aerodynamische Leistung in dem betreffenden Moment dar. Diese verfügbare Leistung bildet dann den Ausgangspunkt, aus dem eine Solldrehzahl und daraus eine an den Generator einzustellende Sollleistung vorgegeben wird, wie dies oben auch schon anhand einiger Ausführungsformen erläutert wurde.

Der Zustandsbeobachter ermittelt also auch zeitaktuell die verfügbare Leistung und erst daraus wird eine an dem Generator einzustellende Sollleistung ermittelt, die sich von dieser verfügbaren Leistung unterscheidet.

Gemäß einer Ausführungsform kann die Solldrehzahl in Abhängigkeit einer Drehzahl-Leistungskennlinie bestimmt werden. Eine solche Drehzahl-Leistungskennlinie gibt somit einen vordefinierten Zusammenhang zwischen Drehzahl und Leistung an und dient dazu, dass zu einer vorhandenen Drehzahl, oder einer gewünschten Drehzahl, ein zugehöriger Leistungswert ausgewählt werden kann. Hier kann eine übliche, auch sonst in der Windenergieanlagensteuerung verwendete Drehzahl-Leistungskennlinie zugrunde gelegt werden, oder es kann eine spezielle Drehzahl-Leistungskennlinie für diesen Anwendungsfall zugrunde gelegt werden.

Gemäß einer weiteren Ausführungsform wird die Verwendung eines Reglers vorgesehen, um aus der verfügbaren Leistung und der Istdrehzahl des Generators die Sollleistung ermittelt wird.

Vorzugsweise wird dafür in dem Regler zunächst eine Differenz zwischen Solldrehzahl und der Istdrehzahl gebildet. Als Istdrehzahl kann hierbei die mit dem Zustandsbeobachter beobachtete Istdrehzahl verwendet werden. Diese Differenz der Drehzahl, also der Generatordrehzahl, kann hier auch als Regelabweichung bezeichnet werden.

Aus dieser Differenz von Soll- und Istdrehzahl wird über einen Regelalgorithmus ein Differenzdrehmoment bestimmt, das die Differenz zwischen dem beobachteten mechanischen Drehmoment und dem elektrischen Drehmoment bestimmt. Dies kann im einfachsten Fall über einen P-Regler, vorzugsweise aber über einen PI-Regler oder über einen PID-Regler erfolgen.

Zu diesem so ermittelten Differenzdrehmoment, was insoweit auch zunächst eine regelungstechnisch interne Größe darstellt, wird das beobachtete mechanische Drehmoment addiert und diese Summe bildet ein Solldrehmoment.

Dieses Solldrehmoment kann dann an die Steuerung der Windenergieanlage gegeben werden, wobei zuvor oder auch in der Steuerung der Windenergieanlage aus dem Solldrehmoment durch Multiplikation mit der Istdrehzahl die Sollleistung berechnet wird. Auch hier kann für die Istdrehzahl die in dem Zustandsbeobachter beobachtete Istdrehzahl verwendet werden, oder die gemessene.

Die in der Windenergieanlage ohnehin vorhandene Steuerung bzw. Regelung setzt dann diese Sollleistung um, so dass die Windenergieanlage in einem Betriebspunkt arbeitet, der alsbald auch diese Sollleistung als Istleistung aufweisen sollte bzw. an dieser Sollleistung, die sich auch ändern wird, den Betriebspunkt nachführt. Entsprechend stellt sich auch eine neue Istdrehzahl ein, die von diesem Regler, wie eingangs erläutert, weiter verwendet wird.

Anhand dieser Ausführungsform soll auch nochmals beispielhaft ein Grundgedanke der Erfindung erläutert werden. Die Windenergieanlage befindet sich nach einer Netzstützung in einem Betriebszustand mit reduzierter Drehzahl. Die abgegebene Leistung war zuvor überhöht und muss nun rasch abfallen, um eine Wiederbeschleunigung zu erzielen. Die Windenergieanlage soll nun möglichst in einen normalen Betriebszustand zurückgeführt werden und hier wird eine besonders vorteilhafte, insbesondere gezielt gesteuerte Rückführung in diesen normalen Betriebszustand vorgeschlagen. Als Grundlage für diese Rücksteuerung wird die verfügbare Leistung ermittelt, was besonders günstig über einen Zustandsbeobachter erfolgen kann. Ausgehend von dieser ermittelten verfügbaren Leistung wird besonders über einen dynamischen Prozess eine einzustellende Sollleistung ermittelt und der Anlagensteuerung als Vorgabewert zugeführt. Diese Sollleistung ist dabei regelmäßig selbst auch dynamisch, schließlich soll die Anlage zu diesem normalen Betriebspunkt zurückgeführt werden und verändert sich dabei, so dass sich auch die Ausgangswerte für diese vorgeschlagene Zurückführung ändern.

Besonders wird hierbei auch verhindert, dass durch eine unkontrollierte Zurückführung bzw. einen unkontrollierten Versuch einer Zurückführung die Anlage sogar zum Stillstand kommen könnte. Das könnte beispielsweise dann passieren, wenn eine so hohe Leistung gefordert wird, die die Windenergieanlage in dem Moment und in ihrem derzeitigen Betriebszustand nicht aus dem Wind entnehmen kann und somit weiter abgebremst werden könnte, was die Situation noch verschlechtern würde, bis die Anlage im Extremfall zum Stehen kommt.

Ein bevorzugtes Ziel ist auch, dass die Leistung erst gar nicht zu stark abfällt, denn das könnte zu einem erneuten Störfall im Netz führen.

Dieses Verfahren ist somit besonders nützlich für einen Betriebszustand, bei dem die Windenergieanlage durch zuvor überhöhte Leistungsabgabe in ihrer Drehzahl und danach auch in ihrer Leistung reduziert wurde. Grundsätzlich kommt dieses Verfahren aber auch in Betracht, wenn aufgrund anderer Umstände, z.B. anderer Vorgaben des Netzbetreibers oder auch gesetzlichen Vorschriften die Anlage sich in einem Betriebszustand niedrigerer Drehzahl befindet. Also in einem Zustand, in dem die Drehzahl geringer ist als bei den vorliegenden Windverhältnissen üblich bzw. normal wäre.

Ein weiterer Anwendungsfall ist ein Dauerbetrieb, nämlich der Drehzahl-geregelte Betrieb einer Windenergieanlage zur Erreichung eines optimalen Arbeitspunktes für die jeweils aktuelle Windgeschwindigkeit.

Es wurde erkannt, dass ein solcher Zustandsbeobachter zum Ermitteln der verfügbaren Leistung, nämlich zum Ermitteln einer zum Einspeisen verfügbaren aerodynamischen Leistung auch vorteilhaft ist, wenn diese verfügbare Leistung nicht oder nicht nur zum Zurücksteuern der Windenergieanlage in einen normalen Betriebszustand verwendet wird.

Erfindungsgemäß wird auch eine Windenergieanlage vorgeschlagen, die mit einem Verfahren gemäß einer der vorstehend erläuterten Ausführungsformen von einem ersten Betriebszustand in einen zweiten Betriebszustand, insbesondere in einen normalen Betriebszustand zurückgesteuert werden kann.

Vorzugsweise weist die Windenergieanlage eine Rückführsteuereinheit auf, in der das Verfahren zum Zurückführen in den normalen Betriebszustand implementiert ist und ausgeführt werden kann. Die Rückführsteuereinheit kann somit von einem ersten in einen zweiten Betriebszustand steuern. Eine solche Rückführsteuereinheit ist vorzugsweise mit einer Betriebssteuereinheit der Windenergieanlage verknüpft oder kann einen Teil davon bilden.

Nachfolgend wird die Erfindung anhand von Ausführungsbeispielen exemplarisch unter Bezugnahme auf die begleitenden Figuren näher erläutert.

Figur 1   zeigt eine Windenergieanlage in einer perspektivischen Darstellung.

Figur 2   zeigt zur Veranschaulichung eines vorgeschlagenen Verfahrens eine Struktur zum Vorgeben einer Sollleistung.

Figur 3   veranschaulicht in einem Strukturbild eine Drehzahlregelstruktur.

Figur 4   zeigt mehrere Diagramme zum Veranschaulichen eines Vorgangs eines Frequenzeinbruchs mit Ablauf und Effekt einer Stützung durch eine Windenergieanlage.

Figur 5   zeigt ähnlich wie Figur 4 Diagramme zum Veranschaulichen des Ablaufs eines Frequenzeinbruchs nebst Stützung durch eine Windenergieanlage, wobei hier abweichend zu Figur 4 für die stützende Leistung ein variabler Sollwert einstellbar ist.

Figur 6   zeigt simulierte Leistungsverläufe für die Rückkehr der Leistung zu der normalen Leistung und damit dem normalen Betriebspunkt gemäß einer erfindungsgemäßen Ausführung und im Vergleich zu einer anderen Ausführung.

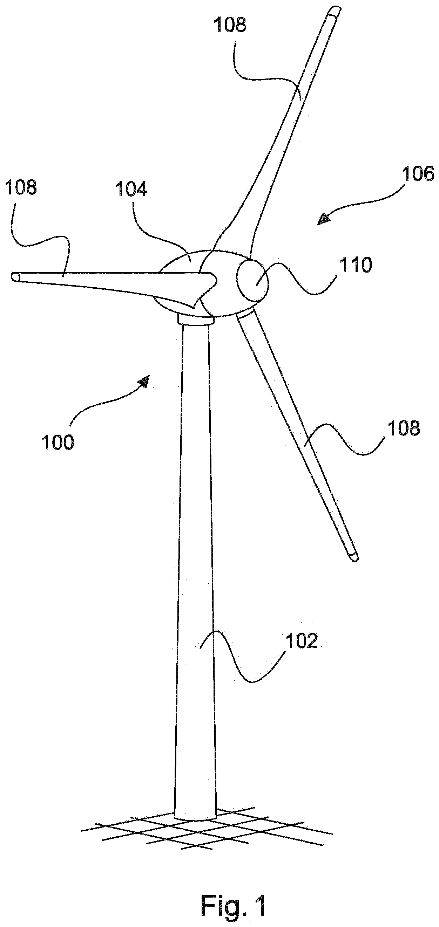

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

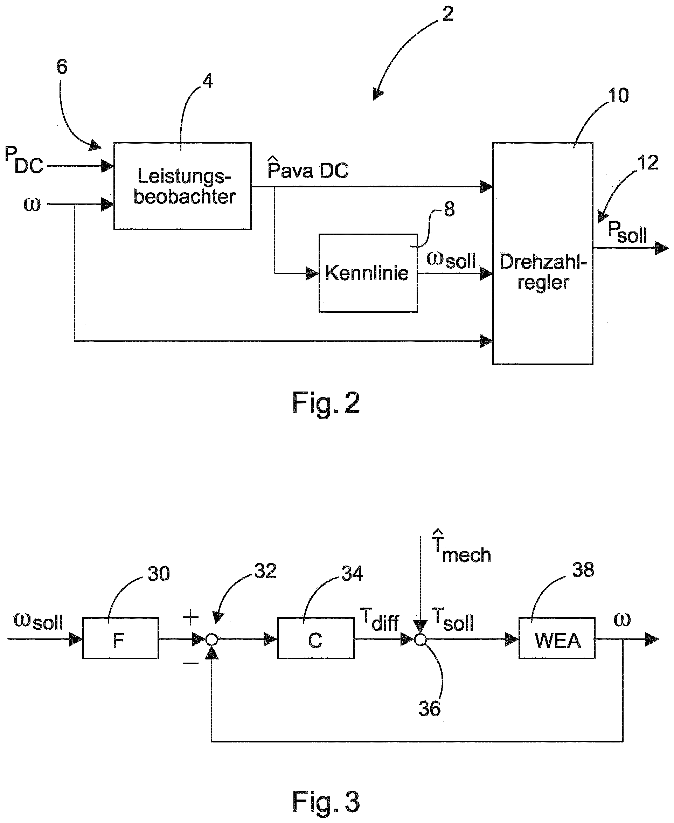

Figur 2 zeigt eine Blockstruktur 2 zum Vorgeben einer Sollleistung $P_{soll}$, die der Windenergieanlage als Leistungssollwert vorgegeben werden soll, um darauf basierend die Windenergieanlage in einen normalen Betriebspunkt zurückzuführen. Diese Blockstruktur 2 zeigt dabei schematisch den Ablauf in einem Überblick.

Als Eingangsgrößen werden eine in einen elektrischen Gleichspannungszwischenkreis eingespeiste Leistung $P_{DC}$ und die Drehzahl des Generators $\omega$ in den Leistungsbeobachter 4 an dessen Eingang 6 eingegeben. Dieser Leistungsbeobachter 4 ist ein Zustandsbeobachter, der die Drehzahl des Generators und das mechanische Drehmoment des Generators als beobachtete Zustandsgrößen aufweisen kann. Als Ergebnis ergibt sich die verfügbare Leistung $\hat{P}_{avaDC}$, die auch als zum Einspeisen verfügbare aerodynamische Leistung bezeichnet wird. Der Index dieser beobachteten Leistung $\hat{P}_{avaDC}$ gibt auch an, dass sich diese auf den Gleichspannungszwischenkreis bezieht. Diese Leistung ist nämlich diejenige, die zwar von der vorherrschenden Windgeschwindigkeit und auch dem derzeitigen Betriebszustand der Windenergieanlage abhängt, also davon abhängt wie viel Leistung dem Wind entnommen werden kann, die aber auch bereits berücksichtigt, dass ein Teil dieser aus dem Wind entnehmbaren Leistung anderweitig benutzt wird, insbesondere zur Erregung des Generators bzw. zur Deckung von Verlusten bei der Energieumwandlung im Generator. Diese verfügbare Leistung $\hat{P}_{avaDC}$ beschreibt somit eine solche, die auch tatsächlich verfügbar ist und von dem Umrichter in das elektrische Versorgungsnetz eingespeist werden könnte.

Insoweit ist diese verfügbare Leistung zwar diejenige, die an dem Zwischenkreis verfügbar ist, unterscheidet sich aber von der in den Zwischenkreis eingespeisten Leistung darin, dass diese durch kontinuierlichen Nachfluss aus dem Wind auch kontinuierlich vorhanden ist und nicht zu einer Veränderung der Drehzahl der Windenergieanlage führen würde.

Aus dieser verfügbaren Leistung $\hat{P}_{avaDC}$ wird nun über einen Kennlinienblock 8, in dem eine Drehzahl-Leistungskennlinie hinterlegt ist, eine Solldrehzahl $\omega_{soll}$ bestimmt. Diese Solldrehzahl ist eine Eingangsgröße für den Drehzahlregler im Drehzahlreglerblock 10, der noch in Figur 3 erläutert wird.

Die verfügbare Leistung $\hat{P}_{avaDC}$ ist ebenfalls eine Eingangsgröße für den Drehzahlregler im Block 10 und auch die Drehzahl ist eine weitere Eingangsgröße für diesen Drehzahlregler im Drehzahlreglerblock 10. Hierbei kann die gemessene oder die im Leistungsbeobachter 4 als geschätzte Zustandsgröße vorhandene Drehzahl verwendet werden.

Der Drehzahlregler im Block 10 generiert daraus nun, in einem dynamischen Prozess, die Sollleistung für die Windenergieanlage an seinem Reglerausgang 12.

Figur 3 veranschaulicht einen Drehzahlregler im Sinne des Drehzahlreglerblocks 10. Entsprechend werden auch hier als Eingangsgrößen die Solldrehzahl $\omega_{soll}$, die Istdrehzahl $\omega$ und indirekt die verfügbare Leistung berücksichtigt. Die verfügbare Leistung ist in Figur 3 nicht eingezeichnet, aber das verfügbare mechanische Drehmoment $\hat{T}_{mech}$ hängt damit zusammen und bildet indirekt eine entsprechende Eingangsgröße.

Die Solldrehzahl kann nun zunächst über einen digitalen Filter 30 geführt werden, der beispielsweise ein Tiefpass erster Ordnung sein kann. Dadurch kann sich eine Regelstruktur mit zwei Freiheitsgraden ergeben, die eine Verbesserung der Robustheit des Regelkreises gegenüber Modellierungsungenauigkeiten der Regelstrecke bei gleichbleibend guter Sollwertfolgeperformance erlaubt. Auch der umgekehrte Fall, dass also eine gute Robustheit bei guter

**EP 3 292 301 B1**

Modellierungsgenauigkeit aber nicht so guter Sollwertperformance existiert, wäre hierzu erwähnen.

Es wird nun im Differenzblock 32 eine Differenz zwischen Soll- und Istwert der Drehzahl gebildet. Diese Differenz wird auf den Reglerblock 34 gegeben, der daraus über einen Regelalgorithmus das entsprechende Differenzmoment bestimmt. Der Regelalgorithmus kann insbesondere eine P-Struktur, PI-Struktur oder PID-Struktur aufweisen.

Das so bestimmte Differenzdrehmoment wird an dem Summierglied 36 zu dem beobachteten mechanischen Drehmoment $\hat{T}_{mech}$ addiert, so dass sich ein Solldrehmoment aus $T_{soll}$ ergibt, das als Eingangs- und Vorgabegröße der Steuerung der Windenergieanlage übergeben werden kann. Dies wird durch den Windenergieanlagenblock 38 dargestellt. In dem Windenergieanlagenblock 38 kann auch die Berechnung der Sollleistung $P_{soll}$ aus Multiplikation des Sollmomentes $T_{soll}$ mit der Drehzahl $\omega$ erfolgen.

Entsprechend wird also in dem Windenergieanlagenblock 38 die Windenergieanlage geregelt und die Windenergieanlage als solche ist darin auch enthalten und liefert letztlich als Ausgang die physikalische Größe ihrer Drehzahl, also der Drehzahl des Generators $\omega$, die zum Differenzglied 32 zurückgeführt. Das Differenzglied 32 kann natürlich auch als Summierglied 32 mit negativem Eingang bezeichnet werden.

Das Anwendungsgebiet der Erfindung konzentriert sich auf den Einsatz von Windenergieanlagen zur Netzunterstützung bei Frequenzeinbrüchen, z.B. bei Kraftwerksausfällen. Dabei kann der Leistungsbeobachter auch als Grundlage für verschiedene andere Regelalgorithmen für eine Windenergieanlage verwendet werden, wie z.B. für eine Vorhalteleistungsregelung, oder eine optimierte Regelung des Arbeitspunktes im Normalbetrieb der Windenergieanlage.

Die Erfindung hat besonders den Zweck, die Ausführung einer Netzunterstützung durch Leistungserhöhung noch verträglicher als bisher zu gestalten und insbesondere die Verringerung der Wirkleistung nach Ende der Leistungserhöhung möglichst gering zu halten. Hierdurch wird eine erneute Störung der Energiesystemleistungsbilanz auf ein Mindestmaß beschränkt.

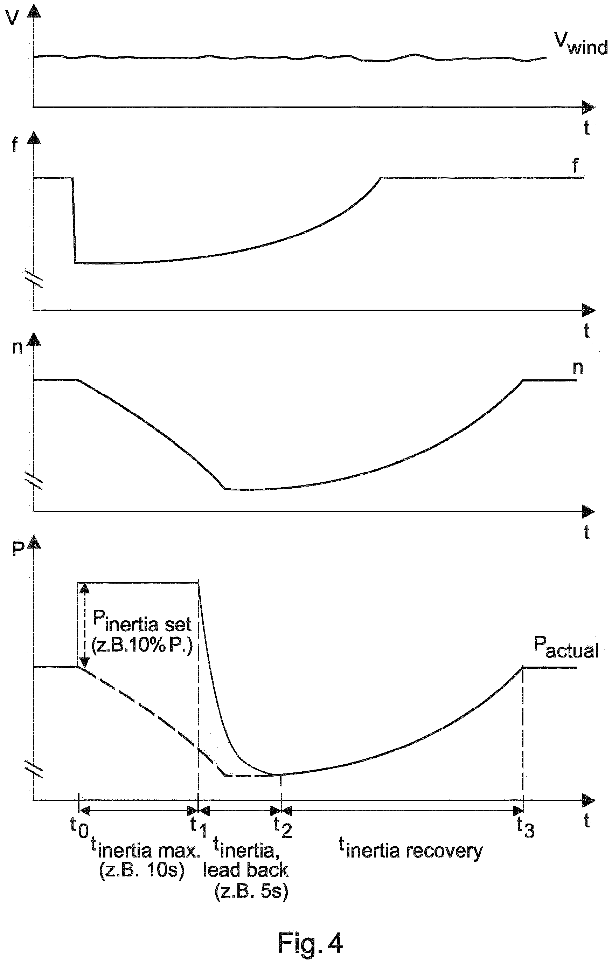

Eine Rückkehr auf einen optimalen Arbeitspunkt nach Ende einer Leistungserhöhung ist schematisch in Figur 4 dargestellt, die ein typisches Verhalten zeigt.

Figur 4 stellt über die Zeit t die Windgeschwindigkeit v, die Netzfrequenz f, die Drehzahl n, die auch als $\omega$ bezeichnet werden kann, und die eingespeiste Leistung P dar. Zum Zeitpunkt to tritt der Frequenzeinbruch auf, bzw. wird erkannt. Die Frequenz f bricht somit ein, die Leistung P wird weit über den bisherigen Wert gesetzt und dafür wird kinetische Energie verwendet, mit der Folge, dass die Drehzahl n langsam abnimmt. Es wird davon ausgegangen, dass die Windgeschwindigkeit über den gesamten untersuchten Zeitraum im Wesentlichen konstant ist.

Die Netzstützung durch die erhöhte Leistungseinspeisung endet zum Zeitpunkt $t_1$ zu dem die Leistung P dann langsam abfällt, nämlich bisher stark unter den bisherigen Wert und damit auch stark unter das aufgrund der vorhandenen Windgeschwindigkeit mögliche Maß.

Zum Zeitpunkt $t_2$ steigt die Leistung dann allmählich wieder an. Auch die Drehzahl n steigt dann allmählich wieder an.

Zum Zeitpunkt $t_3$ haben sich die Verhältnisse wieder normalisiert und es liegt ein normaler Betriebspunkt vor, mit einer eingespeisten Leistung P und einer Drehzahl n wie vor dem Frequenzeinbruch. In dem Beispiel hat sich die Frequenz f allerdings schon deutlich früher erholt.

Wie in Figur 4 dargestellt ist, wird somit der Leistungssollwert der Windenergieanlage (WEA) nach Ende der eingestellten Leistungserhöhungsdauer über den Zeitraum $t_{inertia, lead, back}$ verringert. Nach Ende dieses Zeitraums, also etwa zum Zeitpunkt $t_2$, liegt der Leistungssollwert auf dem Wert, der nach einer fest voreingestellten Drehzahl-Leistungskennlinie der aktuellen Drehzahl zugeordnet ist. Da die Drehzahl jedoch auf Grund der bremsenden Wirkung der vorhergehenden Leistungserhöhung gegenüber einem für die aktuellen Windverhältnisse optimalen Wert zu niedrig ist, entspricht dieser Leistungssollwert nicht der aktuell durch den Wind verursachten aerodynamischen Leistung. Stattdessen liegt der Leistungssollwert häufig deutlich unter dem vor Auslösung der Netzstützung ausgebrachten Wirkleistungsniveau, das betreffen auch die Referenzen [1, 2]. Durch die starke Reduzierung der Wirkleistung beschleunigt die Windenergieanlage (WEA) innerhalb weniger Sekunden wieder auf eine höhere Drehzahl und kehrt zu einem normalen Betriebsverhalten zurück. Aus Sicht des Energiesystems ist eine solch starke Verringerung der Wirkleistungsabgabe jedoch als erneute Störung zu werten und damit soweit möglich zu verringern und das betrifft auch die Referenz [1].

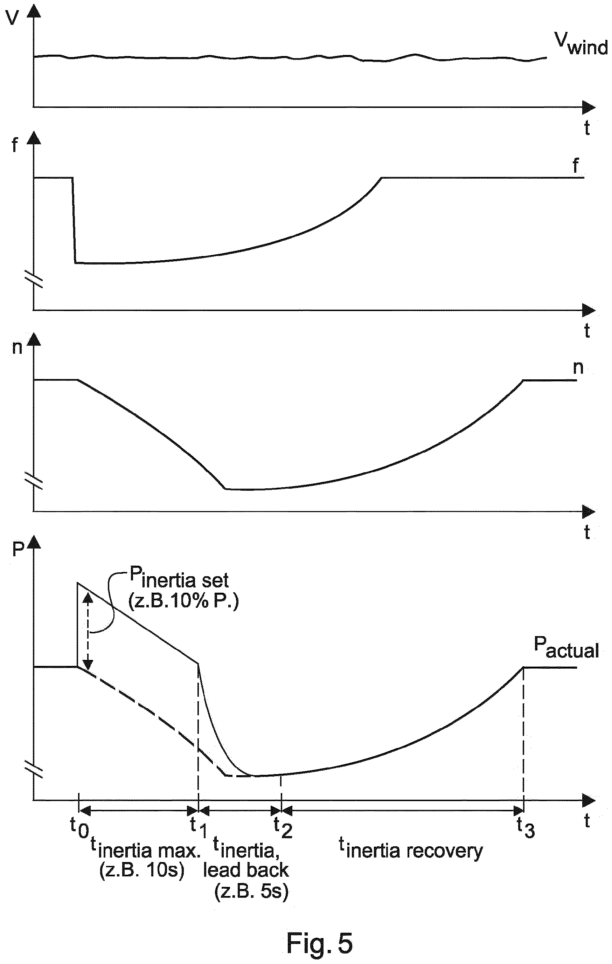

Eine Leistungserhöhung mit variablem Sollwert ist in Figur 5 dargestellt.

Die Verläufe und Bedingungen der Figur 5 entsprechen denen der Figur 4 und für Erläuterungen wird somit auf Figur 4 verwiesen. Der wesentliche Unterschied des Verhaltens gemäß Figur 5 ist, dass beim Frequenzeinbruch bei to die eingespeiste Leistung zunächst ganz ähnlich auf eine Anfangsleistung erhöht wird, aber nicht die Anfangsleistung beibehält, sondern etwa um einen konstanten Differenzwert über einer der sinkenden Drehzahl n zugeordneten fiktiven Leistung liegt. Diese fiktive Leistung ist in Figur 5, und auch in Figur 4, jeweils in dem unteren Diagramm gestrichelt eingezeichnet.

Im Ergebnis verhält sich aber der Leistungseinbruch hier aber ganz ähnlich wie das zu Figur 4 erläutert wurde.

Ein veröffentlichtes Verfahren ist das, das als "Dynamic Inertia Regulation", von Repower Systems gemäß Referenz [3] bezeichnet wird. In diesem Verfahren erfolgt eine Steuerung der Rückkehr der Windenergieanlage (WEA) von einem Arbeitspunkt mit verringerter Drehzahl zu einem optimalen Arbeitspunkt, der auch als normaler Arbeitspunkt bezeichnet werden kann, über die Vorgabe eines Solldrehzahlgradienten bzw. eines Gradientenkorridors definiert durch Mindest- und Maximalgradienten. Dies führt demnach zu einer konstanten Differenz zwischen aerodynamischem und elektrischem Drehmoment während der Rückführungsdauer. Ein Nachteil dieses Verfahrens ist die Verwendung eines Drehzahlgradienten im Rahmen des Regelverfahrens. Dies erfordert eine qualitativ hochwertige Messung des Drehzahlsignals, damit eine numerische Ableitung nicht durch zu hohen Rauschpegel für die Regelung ungeeignet ist.

Andernfalls könnte eine starke Filterung des Drehzahlsignals oder ähnlich zum erfindungsgemäßen Verfahren der Einsatz eines Zustandsbeobachters für die Drehzahl und/oder ihre Ableitung eine Lösung sein. Dies wird jedoch in der Referenz [3] nicht beschrieben.

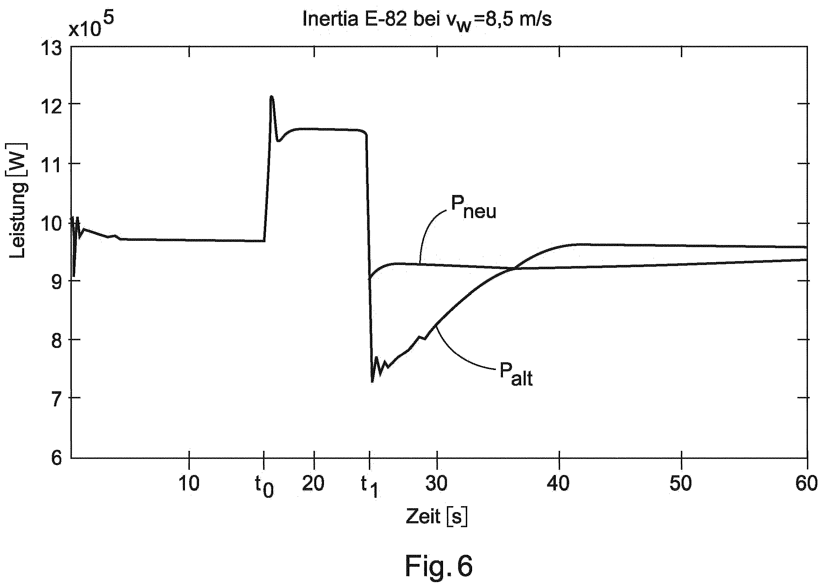

In Figur 6 ist ein Vergleich der simulierten Leistungsverläufe für ein bekanntes Verfahren $P_{alt}$ und für ein erfindungsgemäß vorgeschlagenes Verfahren $P_{neu}$ gezeigt, das parametriert ist für eine Rückführdauer von ca. 60 s bei einer Windgeschwindigkeit von $v_w = 8{,}5$ m/s. Es ist zu erkennen, dass die Leistung $P_{neu}$ gemäß dem erfindungsgemäß vorgeschlagene Verfahren nach Ende der Leistungserhöhung bei $t_1$ deutlich weniger abfällt, als die Leistung $P_{alt}$ gemäß dem Vergleichsverfahren.

Ein Ziel der Erfindung ist somit eine Verringerung der Leistungsreduktion der Windenergieanlage (WEA) nach dem Ende der Leistungserhöhung während der Netzstützung und Steuerbarkeit der Dauer der Rückkehr zum optimalen Arbeitspunkt der Windenergieanlage (WEA).

Besonders erreicht werden soll eine Steuerbarkeit der Tiefe des Leistungseinbruchs nach dem Ende der Netzstützungs-Leistungserhöhungsphase durch Einstellbarkeit eines Sollwertfilters im Regelverfahren, □und, bei geeigneter Parametrierung des Filters, nämlich des Zustandsbeobachters, deutliche Verringerung des Leistungseinbruchs gegenüber bisher bekannten Verfahren und damit eine Reduzierung der Störung des Leistungsbilanzungleichgewichts in dem betroffenen Energiesystem.

Bezug nehmend auf die im Detail erläuterten Ausführungsformen und Ergebnisse, aber auch verallgemeinerbar soll das Nachfolgende noch zur Erläuterung ergänzt werden.

Die Erfindung bezieht sich auf ein Verfahren zur Netzunterstützung durch Windenergieanlagen, die hier als WEA abgekürzt werden, bei einem signifikanten Einbruch der Netzfrequenz. Die Möglichkeit einer kurzfristigen Erhöhung der abgegebenen Wirkleistung einer Windenergieanlage in einem solchen Fall ist bekannt und wird hier Stützung genannt.

Die Wirkleistungserhöhung als Reaktion auf einen Netzfrequenzeinbruch kann über einen einstellbaren Zeitraum und mit einer bestimmten festen Erhöhung gegenüber der Wirkleistung im Moment der Stützungs-Auslösung erfolgen.

Die Folge einer erhöhten Wirkleistungsabgabe ist typischerweise eine Verringerung der Drehzahl der WEA gegenüber dem Moment vor Stützungs-Auslösung. Dies lässt sich anschaulich mit Hilfe der Beschleunigungsgleichung eines rotierenden Ein-Massen-Systems darstellen:

$$J\dot{\omega} = T_{mech} - T_{el} = \frac{1}{\omega}\left(P_{mech} - P_{el}\right)$$

In dieser Formel bezeichnet J das Trägheitsmoment der rotierenden Massen der WEA, $\omega$ die Drehzahl der WEA, $\hat{T}_{mech}$ und $P_{mech}$ das an der Welle durch den Wind entstehende Drehmoment bzw. die Leistung, und $T_{el}/P_{el}$ das elektro-mechanische Drehmoment bzw. die Leistung des Generators. Wird über einen Zeitraum hinweg eine Generatorleistung entnommen, die die mechanische Leistung übersteigt, folgt ein Abbremsen der WEA.

Diese Ungleichheit der Leistungsbilanz tritt bei ungefähr gleichbleibender Windgeschwindigkeit während eines Stützungs-Ereignisses auf. Der Effekt wird noch dadurch verstärkt, dass sich der aerodynamische Wirkungsgrad der WEA bei abnehmender Drehzahl und gleichbleibender Windgeschwindigkeit gegenüber einem optimalen Arbeitspunkt vor Beginn der Stützungs-Funktion verschlechtern kann. Ein optimaler Arbeitspunkt wird bei einer bestimmten Schnelllaufzahl, nämlich dem Verhältnis von Blattspitzenumlaufgeschwindigkeit zu Windgeschwindigkeit, erreicht. Die Abnahme der Schnelllaufzahl während der Stützungs-Auslösung führt typischerweise zu einer sinkenden aerodynamischen Leistung bei gleichbleibender Windgeschwindigkeit. Nach Ende der Leistungserhöhung befindet sich die WEA in Bezug auf Drehzahl und Windgeschwindigkeit also häufig an einem suboptimalen Arbeitspunkt, d.h. die Drehzahl ist zu niedrig im Verhältnis zur Windgeschwindigkeit, so dass nicht die optimale Schnelllaufzahl vorliegt. Es stellt sich also das Problem, die WEA in der Folge wieder zu beschleunigen, um eine höhere Drehzahl mit damit verbundenem höherem aerodynamischem Wirkungsgrad zu erreichen. Hierfür stehen verschiedene Optionen zur Wahl:

- Eine starke Reduzierung der Wirkleistungsabgabe nach Ende der Stützungs-Leistungserhöhung, welche eine schnelle Beschleunigung der WEA und somit eine schnelle Rückkehr zu einem optimalen Arbeitspunkt zur Folge hat. Das betrifft die Referenz [2].

- Eine geringe Reduzierung der Wirkleistungsabgabe nach Ende der Stützungs-Leistungserhöhung, die eine langsame Beschleunigung oder bei zu geringer Reduzierung sogar ein weiteres Abbremsen der WEA zur Folge hat.

Aus Sicht der Frequenzstabilität in einem Energiesystem ist die letztere Option vorteilhaft, was auch die Referenz [1] betrifft. Ein starkes Absenken der Wirkleistung durch eine große Zahl WEA in einem Energiesystem kommt einer erneuten Störung der Leistungsbilanz dieses Energiesystems gleich. Häufig ist es gerade eine solche Störung der Leistungsbilanz, die z.B. hervorgerufen wird durch Ausfall eines Kraftwerks oder einer Leitung, die für einen Frequenzeinbruch und somit für die Auslösung der Stützungs-Funktion verantwortlich war. Somit gilt es, die Leistungsreduktion auf ein Mindestmaß zu begrenzen, so dass die Drehzahl der WEA nicht weiter absinkt sondern kontrolliert und über einen längeren Zeitraum wieder auf die optimale Drehzahl erhöht werden kann.

Die hier beschriebene Erfindung beschreibt eine Lösung zur Rückführung der WEA auf einen optimalen Betriebspunkt nach Beendigung der Stützungs-Leistungserhöhung mit einer möglichst geringen Leistungsreduktion gegenüber der vor Stützungs-Auslösung ausgebrachten Wirkleistung. Dafür wird ein Verfahren vorgeschlagen, das in Figur 2 graphisch dargestellt wird.

Per Messung werden die Größen Drehzahl ($\omega$) und Leistung im Gleichstromzwischenkreis ($P_{DC}$) erfasst. Daraus wird mit Hilfe eines Zustandsbeobachters eine verfügbare aerodynamische Leistung bezogen auf den Zwischenkreis ($\hat{P}_{avaDC}$) errechnet, d.h. sie entspricht der aerodynamischen Leistung abzüglich der Generatorverluste. Zu dieser verfügbaren Leistung wird über eine Kennlinie eine Solldrehzahl ($\omega_{soll}$) berechnet. Unter Verwendung der berechneten verfügbaren Leistung $\hat{P}_{avaDC}$ wird schließlich von einem Drehzahlregler ein Leistungssollwert ausgegeben. Dieser wird von der bestehenden Leistungsregelungssoftware der WEA in ein Stellsignal für den elektrisch erregten Generator umgesetzt, das dazu führt, dass die WEA über einen parametrierbaren Zeitraum die Solldrehzahl erreicht. Die einzelnen Verfahrensbestandteile werden nun gesondert beschrieben:

Zum Leistungsbeobachter und ausgehend von Gleichung (1) kann folgendes Zustandsraummodell der WEA aufgestellt werden, mit den Zustandsvariablen Drehzahl ($\omega$) und mechanisches Drehmoment ($T_{mech}$):

$$\begin{bmatrix} \dot{\omega} \\ \dot{T}_{mec} \end{bmatrix} = \begin{bmatrix} 0 & \frac{1}{J} \\ 0 & 0 \end{bmatrix} \begin{bmatrix} \omega \\ T_{mech} \end{bmatrix} + \begin{bmatrix} -\frac{1}{J} \\ 0 \end{bmatrix} T_{el}$$

Von den hier verwendeten Größen kann das mechanische Drehmoment $T_{mech}$ nicht gemessen werden und soll deshalb über einen Zustandsbeobachter aus den Messdaten errechnet werden. Da darüber hinaus das Drehzahlsignal oft nur in geringer Auflösung und mit niedriger Abtastrate gemessen wird, wird auch für diesen Wert eine Zustandsbeobachtung vorgeschlagen. Eine geeignete Beobachterstruktur lässt sich wie folgt formulieren, wobei zur weiteren Erläuterung auf Referenz [4] verwiesen wird:

$$\begin{bmatrix} \dot{\hat{\omega}} \\ \dot{\hat{T}}_{mech} \end{bmatrix} = \begin{bmatrix} -k_{\omega} & \frac{1}{J} \\ -k_T & 0 \end{bmatrix} \begin{bmatrix} \hat{\omega} \\ \hat{T}_{mech} \end{bmatrix} + \begin{bmatrix} k_{\omega} & -\frac{1}{J} \\ k_T & 0 \end{bmatrix} \begin{bmatrix} \omega \\ T_{el} \end{bmatrix}$$

Hierin sind beobachtete Variablen im Gegensatz zu den gemessenen Eingangsgrößen Drehzahl $\omega$ und dem elektrischen Drehmoment $T_{el} = \frac{P_{DC}}{\omega}$ mit ^ gekennzeichnet. Die beiden Parameter $k_{\omega}$ und $k_T$ beeinflussen das dynamische Verhalten und bei einer zeitdiskreten Implementierung auch die Stabilität des Zustandsbeobachters und müssen unter Berücksichtigung dieser Aspekte gewählt werden.

Die Berechnung der aerodynamischen Leistung $\hat{P}_{avaDC}$ erfolgt über das Produkt aus Drehzahl und Drehmoment.

Zur Kennlinie ist zu erläutern, dass diese Komponente jeder errechneten verfügbaren Leistung $\hat{P}_{avaDC}$ eine Solldrehzahl $\omega_{soll}$, zuordnet, z.B. über eine statische Kennlinie.

Der Drehzahlregler muss eine Rückkehr der WEA zu der berechneten Solldrehzahl unter Berücksichtigung einer möglichst geringen Wirkleistungsreduktion erzielen. Seine Struktur ist in Figur 3 in Form eines vereinfachten Blockschaltbildes dargestellt. Es wird der Drehzahlfehler berechnet und aus diesem über einen P-/PI-/PID-Regler C ein Differenzdrehmoment zwischen beobachtetem mechanischen Drehmoment und dem elektrischen Drehmoment berechnet. Dies wird zu dem beobachteten mechanischen Drehmoment addiert und damit ein Solldrehmoment bzw. nach Multiplikation mit der aktuellen Drehzahl eine elektrische Solleistung berechnet.

Vorzugsweise wird die Solldrehzahl durch einen digitalen Filter F, z.B. einen Tiefpass erster Ordnung vor Berechnung des Drehzahlfehlers gefiltert. Dadurch ergibt sich eine Reglerstruktur mit zwei Freiheitsgraden, die eine Verbesserung der Robustheit des Regelkreises gegenüber Modellierungsungenauigkeiten der Regelstrecke bei gleichbleibend guter Sollwertfolgeperformance oder umgekehrt erlaubt.□Die Rückkehrdauer der WEA von der verringerten Drehzahl zu der Solldrehzahl lässt sich über die Wahl eines Parameters des Filters F nach den gewünschten Anforderungen einstellen. Z.B. ist eine Einschwingzeit des Regelkreises von 60 s eine bevorzugte Wahl.

Neben der Verringerung des Leistungseinbruches in der Erholphase erlaubt der beschriebene Leistungsbeobachter auch eine weitere Option für die Erhöhung der Leistung nach der Erkennung eines Frequenzeinbruchs. Hierbei kann die Leistung um einen festen Wert gegenüber dem zeitlich veränderlichen "normalen" drehzahlabhängigen Leistungssollwert erhöht werden. Hier besteht dafür mit dem Leistungsbeobachter die Möglichkeit, die berechnete aerodynamische Leistung und nicht wie bisher einen drehzahlabhängigen Leistungssollwert als Referenz für die Leistungserhöhung zu verwenden. Die Erfindung hat, zumindest gemäß einer Ausführungsform, den Zweck, die Ausführung der Netzunterstützung durch eine Stützung nach einem Frequenzeinbruch für das Energiesystem besonders verträglich zu gestalten und insbesondere die Verringerung der Wirkleistung nach Ende der Leistungserhöhung möglichst gering zu halten. Hierdurch wird eine erneute Störung der Energiesystemleistungsbilanz auf ein Mindestmaß beschränkt.

**Patentansprüche**

1. Verfahren zum Betreiben einer einen Generator aufweisenden Windenergieanlage (WEA,100) zum Einspeisen elektrischer Leistung in ein elektrisches Versorgungsnetz, wobei nach einem ersten Betriebszustand mit einer ersten Leistungsabgabe und einer ersten Drehzahl in einen zweiten Betriebszustand mit einer zweiten Leistungsabgabe und einer zweiten Drehzahl gesteuert wird, **dadurch gekennzeichnet, dass** zum Steuern in den zweiten Betriebszustand

   - eine zum Einspeisen verfügbare aerodynamische Leistung ($\hat{P}_{ava\,Dc}$) bestimmt wird, wobei die verfügbare Leistung ($\hat{P}_{ava\,DC}$) aus einer Drehzahl ($\omega$) des Generators und der in einen elektrischen Zwischenspeicher, insbesondere einem Gleichspannungszwischenkreis, eingespeisten Leistung ($P_{DC}$) ermittelt wird,
   - aus dieser verfügbaren Leistung eine Solldrehzahl ($\omega_{soll}$) bestimmt wird und
   - aus der Solldrehzahl eine an dem Generator einzustellende Sollleistung ($P_{soll}$) vorgegeben wird.

2. Verfahren nach Anspruch 1, **dadurch gekennzeichnet, dass** die verfügbare Leistung durch einen Zustandsbeobachter (4) ermittelt wird.

3. Verfahren nach einem der vorstehenden Ansprüche, **dadurch gekennzeichnet, dass** der bzw. ein zur Ermittlung der verfügbaren Leistung ($\hat{P}_{ava\,DC}$) verwendeter Zustandsbeobachter (4) die Drehzahl des Generators ($\omega$) und das mechanische Drehmoment ($T_{mech}$) des Generators als zu beobachtende Zustandsgrößen aufweist.

4. Verfahren nach einem der vorstehenden Ansprüche, **dadurch gekennzeichnet, dass** der bzw. ein zur Ermittlung der verfügbaren Leistung verwendeter Zustandsbeobachter (4) definiert ist durch die Struktur:

$$\begin{bmatrix} \dot{\hat{\omega}} \\ \dot{\hat{T}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

   in der

   - J das gemeinsame Trägheitsmoment des Rotors und Generators bezeichnet,
   - $\omega$ die Drehzahl des Generators ist,
   - $k_\omega$ und $k_\tau$ Parameter zur Beeinflussung der Dynamik des Beobachters sind,
   - $T_{el}$ als elektrisches Drehmoment bezeichnet wird und sich als Quotient eingespeister Leistung $P_{DC}$ in einen bzw. den elektrischen Zwischenspeicher und der Drehzahl $\omega$ berechnet und
   - $T_{mech}$, das mechanische Drehmoment des Rotors und Generators bezeichnet, wobei

   die beobachteten Größen mit einem ^-Zeichen gekennzeichnet sind und die zu ermittelnde verfügbare Leistung als Produkt aus beobachteter Drehzahl $\hat{\omega}$ und beobachtetem mechanischen Drehmoment $\hat{T}_{mech}$ berechnet wird.

5. Verfahren nach einem der vorstehenden Ansprüche, **dadurch gekennzeichnet, dass** in einem Regler (10) aus der verfügbaren Leistung und der Istdrehzahl ($\omega$) des Generators die Sollleistung ($P_{soll}$) ermittelt wird.

6. Verfahren nach einem der vorstehenden Ansprüche, **dadurch gekennzeichnet, dass** eine Solldrehzahl ($\omega_{soll}$)

abhängig der verfügbaren aerodynamischen Leistung aus einer Drehzahl-Leistungs-Kennlinie (8) bestimmt wird.

7. Verfahren nach einem der vorstehenden Ansprüche, **dadurch gekennzeichnet, dass** in einem bzw. dem Regler (10)

- eine Differenz zwischen der Solldrehzahl ($\omega_{soll}$) und der Istdrehzahl ($\omega$), insbesondere der beobachteten Istdrehzahl ($\hat{\omega}$) gebildet wird,
- aus der Differenz über einen Regelalgorithmus ein Differenzdrehmoment ($T_{diff}$) zwischen beobachtetem mechanischen Drehmoment ($\hat{T}_{mech}$) und dem elektrischen Drehmoment ($T_{el}$) bestimmt wird,
- aus der Summe des Differenzdrehmoments und dem beobachteten mechanischen Drehmoment ein Solldrehmoment ($T_{soll}$) und
- aus dem Solldrehmoment durch Multiplikation mit der Istdrehzahl die Sollleistung berechnet wird.

8. Verfahren nach einem der vorstehenden Ansprüche, **dadurch gekennzeichnet, dass** der erste Betriebszustand ein Betriebszustand erhöhter Leistungsabgabe ist, bei dem die Windenergieanlage kurzzeitig mehr Leistung abgegeben hat, als sie aufgrund der vorherrschenden Windbedingungen erzeugen konnte.

9. Windenergieanlage (100) mit einem Generator zum Einspeisen elektrischer Leistung in ein elektrisches Versorgungsnetz, wobei die Windenergieanlage dazu vorbereitet ist, nach einem ersten Betriebszustand mit einer ersten Leistungsabgabe und einer ersten Drehzahl in einen zweiten Betriebszustand mit einer zweiten Leistungsabgabe und einer zweiten Drehzahl zu steuern, und zum Ausführen des Verfahrens nach einem der Ansprüche 1 bis 8 eine Rückführsteuereinheit aufweist, in der das Verfahren implementiert ist.

**Claims**

1. Method for operating a wind power installation (WPI, 100), comprising a generator, for feeding electrical power into an electrical supply network, wherein after a first operating state with a first power output and a first rotational speed, a controlled change is made into a second operating state with a second power output and a second rotational speed, **characterized in that**,

for the controlled change into the second operating state,

- an aerodynamic power available ($\hat{P}_{ava\,DC}$) for the feed is determined, wherein the available power ($\hat{P}_{ava\,DC}$) is determined from a rotational speed ($\omega$) of the generator and the power fed into ($P_{DC}$) an intermediate electrical storage unit, in particular a DC voltage intermediate circuit,
- a setpoint rotational speed ($\omega_{soll}$) is determined from this available power, and
- a setpoint power ($P_{soll}$) to be adjusted at the generator is specified from the setpoint rotational speed.

2. Method according to Claim 1, **characterized in that** the available power is determined by a state observer (4).

3. Method according to one of the preceding claims, **characterized in that** the or a state observer (4) used for determining the available power ($\hat{P}_{ava\,DC}$) has the rotational speed of the generator ($\omega$) and the mechanical torque ($T_{mech}$) of the generator as state variables to be observed.

4. Method according to one of the preceding claims, **characterized in that** the or a state observer (4) used for determining the available power is defined by the structure:

$$\begin{bmatrix} \dot{\hat{\boldsymbol{\omega}}} \\ \dot{\hat{\boldsymbol{T}}}_{mech} \end{bmatrix} = \begin{bmatrix} -k_\omega & \frac{1}{J} \\ -k_T & 0 \end{bmatrix} \begin{bmatrix} \hat{\omega} \\ \hat{T}_{mech} \end{bmatrix} + \begin{bmatrix} k_\omega & -\frac{1}{J} \\ k_T & 0 \end{bmatrix} \begin{bmatrix} \omega \\ T_{el} \end{bmatrix}$$

in which

- J denotes the combined moment of inertia of the rotor and generator,
- $\omega$ is the rotational speed of the generator,
- $k_\omega$ and $k_\tau$ are parameters for influencing the dynamic response of the observer,
- $T_{el}$ is referred to as an electrical torque and is calculated as the ratio of the power $P_{DC}$ fed into a or the intermediate electrical storage unit and the rotational speed $\omega$, and
- $T_{mech}$ denotes the mechanical torque of the rotor and the generator, wherein

the observed variables are marked with a ^ symbol and the available power to be determined is calculated as the product of the observed rotational speed $\hat{\omega}$ and the observed mechanical torque $\hat{T}_{mech}$.

5. Method according to one of the preceding claims, **characterized in that** the setpoint power ($P_{soll}$) is determined in a regulator (10) from the available power and the actual rotational speed ($\omega$) of the generator.

6. Method according to one of the preceding claims, **characterized in that** a setpoint rotational speed ($\omega_{soll}$) is determined as a function of the available aerodynamic power from a rotational speed/power characteristic curve (8).

7. Method according to one of the preceding claims, **characterized in that** in a or the regulator (10),

- a difference between the setpoint rotational speed ($\omega_{soll}$) and the actual rotational speed ($\omega$), in particular the observed actual rotational speed ($\hat{\omega}$), is formed,
- a differential torque ($T_{diff}$) between the observed mechanical torque ($\hat{T}_{mech}$) and the electrical torque ($T_{el}$) is determined from the difference by means of a regulating algorithm,
- a setpoint torque ($T_{soll}$) is determined from the sum of the differential torque and the observed mechanical torque, and
- the setpoint power is determined from the setpoint torque by multiplication by the actual rotational speed.

8. Method according to one of the preceding claims, **characterized in that** the first operating state is an operating state with increased power output, in which the wind power installation has temporarily output more power than it was able to generate on the basis of the prevailing wind conditions.

9. Wind power installation (100) having a generator for feeding electrical power into an electrical supply network, wherein the wind power installation is configured, after a first operating state with a first power output and a first rotational speed, for controlled change into a second operating state with a second power output and a second rotational speed, and comprises a return control unit, in which the method is implemented, for carrying out the method according to one of Claims 1 to 8.

**Revendications**

1. Procédé pour faire fonctionner une éolienne (WEA, 100) présentant un générateur pour l'injection de puissance électrique dans un réseau d'alimentation électrique, dans lequel

   après un premier état de fonctionnement avec une première émission de puissance et une première vitesse de rotation dans un second état de fonctionnement avec une seconde émission de puissance et une seconde vitesse de rotation une commande est réalisée, **caractérisé en ce que** pour la commande dans le second état de fonctionnement

   - une puissance aérodynamique ($P^{\wedge}_{ava\ DC}$) disponible pour l'injection est déterminée, dans lequel la puissance disponible ($P^{\wedge}_{ava\ DC}$) est déterminée à partir d'une vitesse de rotation ($\omega$) du générateur et de la puissance ($P_{DC}$) injectée dans un accumulateur intermédiaire électrique, en particulier un circuit intermédiaire à tension continue,
   - à partir de cette puissance disponible une vitesse de rotation de consigne ($\omega_{de\ consigne}$) est déterminée et
   - à partir de la vitesse de rotation de consigne une puissance de consigne ($P_{de\ consigne}$) à régler au niveau du générateur est prédéfinie.

2. Procédé selon la revendication 1, **caractérisé en ce que** la puissance disponible est déterminée par un observateur d'état (4).

3. Procédé selon l'une quelconque des revendications, **caractérisé en ce que** le ou un observateur d'état (4) utilisé pour la détermination de la puissance disponible ($P^{\wedge}_{ava\ DC}$) présente la vitesse de rotation du générateur ($\omega$) et le couple mécanique ($T_{mech}$) du générateur comme grandeurs d'état à observer.

4. Procédé selon l'une quelconque des revendications précédentes, **caractérisé en ce que** le ou un observateur d'état (4) utilisé pour la détermination de la puissance disponible est défini par la structure :

$$\begin{bmatrix} \dot{\hat{\omega}} \\ \dot{\hat{T}}_{mech} \end{bmatrix} = \begin{bmatrix} -k_\omega & \dfrac{1}{J} \\ -k_T & 0 \end{bmatrix} \begin{bmatrix} \hat{\omega} \\ \hat{T}_{mech} \end{bmatrix} + \begin{bmatrix} k_\omega & -\dfrac{1}{J} \\ k_T & 0 \end{bmatrix} \begin{bmatrix} \omega \\ T_{el} \end{bmatrix}$$

dans laquelle

- J désigne le moment d'inertie commun du rotor et du générateur,
- $\omega$ est la vitesse de rotation du générateur,
- $k_\omega$ et $k_T$ sont des paramètres pour l'influence de la dynamique de l'observateur,
- $T_{el}$ est désigné par couple électrique et se calcule comme quotient de puissance injectée $P_{DC}$ dans un ou l'accumulateur intermédiaire électrique et la vitesse de rotation $\omega$ et
- $T_{mech}$ désigne le couple mécanique du rotor et du générateur, dans lequel

les grandeurs observées sont caractérisées avec un signe ^ et la puissance disponible à déterminer est calculée comme produit de la vitesse de rotation $\omega^\wedge$ observée et du couple mécanique observé $T^\wedge_{mech}$.

5. Procédé selon l'une quelconque des revendications précédentes, **caractérisé en ce que** la puissance de consigne ($P_{de\ consigne}$) est déterminée dans un régulateur (10) à partir de la puissance disponible et la vitesse de rotation réelle ($\omega$) du générateur.

6. Procédé selon l'une quelconque des revendications précédentes, **caractérisé en ce qu'**une vitesse de rotation de consigne ($W_{de\ consigne}$) est déterminée en fonction de la puissance aérodynamique disponible à partir d'une ligne caractéristique de vitesse de rotation-puissance (8).

7. Procédé selon l'une quelconque des revendications précédentes, **caractérisé en ce que** dans un ou le régulateur (10)

- une différence entre la vitesse de rotation de consigne ($\omega_{de\ consigne}$) et la vitesse de rotation réelle ($\omega$), en particulier la vitesse de rotation réelle observée ($\omega^\wedge$) est formée,
- à partir de la différence par le biais d'un algorithme de régulation un couple de différence ($T_{diff}$) est déterminé entre le couple mécanique observé ($T^\wedge_{mech}$) et le couple électrique ($T_{el}$),
- à partir de la somme du couple de différence et du couple mécanique observé un couple de consigne ($T_{de\ consigne}$) et
- à partir du couple de consigne par multiplication avec la vitesse de rotation réelle la puissance de consigne est calculée.

8. Procédé selon l'une quelconque des revendications précédentes, **caractérisé en ce que** le premier état de fonctionnement est un état de fonctionnement à émission de puissance augmentée, pour lequel l'éolienne a émis à court terme plus de puissance qu'elle ne pouvait générer en raison des conditions du vent régnantes.

9. Eolienne (100) avec un générateur pour l'injection de puissance électrique dans un réseau d'alimentation électrique, dans laquelle l'éolienne est préparée afin de commander après un premier état de fonctionnement avec une première émission de puissance et une première vitesse de rotation dans un second état de fonctionnement avec une seconde émission de puissance et une seconde vitesse de rotation, et présente pour la réalisation du procédé selon l'une quelconque des revendications 1 à 8 une unité de commande de retour, dans laquelle le procédé est mis en œuvre.

Fig. 1

Fig. 2

Fig. 3

Fig. 4

Fig. 5

Fig. 6

EP 3 292 301 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009014012 A1
- DE 112005000681 T5
- WO 2011124696 A2
- EP 2775139 A1
- US 515537502 A